# EUROPEAN PATENT APPLICATION

(11) **EP 1 830 219 A1**
(43) Date of publication of application: **05.09.2007**
(21) Application number: 05820369.6
(22) Date of filing: 20.12.2005
(51) Int. Cl.: G02B 26/00, G02B 3/14

(54) **OPTICAL DEVICE**

(30) Priority: 21.12.2004 JP 2004369166; 06.01.2005 JP 2005001271; 09.02.2005 JP 2005032904
(71) Applicant: ZEON CORPORATION, Tokyo 100-8323 (JP)
(72) Inventor: KIKUMA, Tadayuki, ZEON CORPORATION, Chiyoda-ku, Tokyo 1008246 (JP); OSHIMA, Masayoshi, 1050014 (JP)
(74) Representative: Vossius & Partner
(86) International application number: PCT/JP2005/023343
(87) International publication number: WO 2006/068128

(57) **Abstract**

An optical element includes a first liquid, a second liquid, and a container, wherein the first liquid and the second liquid substantially differ in refractive index and are immiscible, the first liquid and the second liquid are hermetically placed in the container so that an interface between the first liquid and the second liquid forms a specific shape, the shape of the interface between the first liquid and the second liquid is changed by applying a voltage between the first liquid and the second liquid through electrodes formed in the container, and the container is (1) a resin container of which an inner surface portion of a container wall has a resin phase with a fluorine atom content higher than that of an internal portion of the container wall, (2) a container of which a top portion and a bottom portion are formed of a resin composition including a resin and a hindered amine compound having a transmittance of light with a wavelength of 400 nm measured for a 5 wt% chloroform solution using a cell with 10-mm optical path of 90% or more and a molecular weight of 1500 or more, or (3) a container of which an inner surface is coated with a CVD film formed of a fluorocarbon compound. According to the present invention, an optical element can be provided of which the refractive power for light passing therethrough can be efficiently controlled with a small configuration utilizing an electrowetting phenomenon and which allows continuous transmission or concentration of light from a blue laser (short-wavelength laser).

## Description

### TECHNICAL FIELD

The present invention relates to an optical element which can be reduced in size, allows efficient control of refractive power for light passing therethrough with a simple configuration, is suitable as a variable-focus lens and the like, and allows continuous transmission or concentration of light from a blue laser (short-wavelength laser).

### BACKGROUND ART

A photographic optical system used for photographic devices such as a still camera and a video camera is required to have a focus adjustment function, a magnification adjustment function, and the like. In order to provide the photographic optical system with these functions, an actuator such as a motor and a conversion mechanism which converts the output of the actuator into the movement of a lens in the optical axis direction are necessary. However, since such a conversion mechanism requires a mechanical driver section, the size of the instrument is increased or noise occurs during operation.

Various information recording media such as CD, DVD, MD, BD, and HD-DVD require corresponding pickup lenses. Accordingly, a number of pickup lenses differing in focal length are required to handle the above information recording media using one device, whereby the device structure becomes complicated.

In order to solve the above problems, WO99/18456, JP-A-2001-249282 (US-A-2001-0017985) and the like have proposed a variable-focus lens using an electrocapillary phenomenon (electrowetting phenomenon).

The variable-focus lens disclosed in the above documents has a configuration in which a first liquid and a second liquid which are immiscible are hermetically placed in a container, and the side surface of the container is inclined at a specific angle with the optical axis, wherein, when applying a voltage between the first liquid and the second liquid through electrodes formed at positions at which light passing through is not hindered, the shape of the interface between the first liquid and the second liquid is changed by controlling the applied voltage to change the refractive power for light which passes through the first liquid and the second liquid. In the above variable-focus lens, the electrodes are provided in an insulator, and the surface of the insulator is provided with water repellency by applying a fluororesin or the like. According to the above variable-focus lens, since electric energy can be directly used to change the shape of the lens, the focus can be adjusted without mechanically moving the lens.

In such a variable-focus lens, the shape of the interface between two liquids may become unstable on the inner surface of the container and the electrode where the liquids with different refractive indices come into contact. Moreover, the response to the applied voltage may be decreased. Since the insulator and the water repellent agent are provided between the electrode and the liquids with different refractive indices, the response to the applied voltage is low. And the shape of the liquid interface may become unstable near the inner surface of the container.

An organic-dye optical recording medium (DVD-R) which allows high-density recording/reproduction has been used in practice as an optical recording medium. A red semiconductor laser has been generally used for the organic-dye optical recording medium (DVD-R). In order to increase the recording density of the optical recording medium, an optical recording medium has been developed which allows use of a short-wavelength semiconductor laser (blue laser with a wavelength of 350 nm to 530 nm).

However, when applying light from a short-wavelength laser such as a blue laser with a wavelength of 350 nm to 530 nm to the variable-focus lens, ablation may occur on the surface of the lens at a high irradiation dose, even if the irradiation time is short. When applying laser light for a long period of time while reducing the irradiation dose, the lens may become clouded.

The present invention has been achieved in view of the above-described situation of the related art. A first object of the present invention is to provide an optical element of which the refractive power for light passing therethrough can be efficiently controlled with a small configuration utilizing the electrowetting phenomenon.
A second object of the present invention is to provide an optical element which allows continuous transmission or concentration of light from a blue laser (short-wavelength laser) and of which the refractive power for light passing therethrough can be efficiently controlled with a small configuration utilizing the electrowetting phenomenon.

### DISCLOSURE OF THE INVENTION

In order to achieve the above objects, the inventors of the present invention have conducted extensive studies on an optical element which includes a first liquid, a second liquid, and a container, wherein the first liquid and the second liquid substantially differ in refractive index and are immiscible, the first liquid and the second liquid are hermetically placed in the container so that the interface between the first liquid and the second liquid forms a specific shape, and the shape of the liquid interface is changed by applying a voltage between the first liquid and the second liquid through electrodes formed in the container.

As a result, the inventors have found that the shape of the liquid interface is prevented from becoming unstable and the response to the applied voltage is increased by utilizing any of the following methods (1) to (3). The inventors have found that the method (3) prevents ablation and cloudiness from occurring when applying light from a blue laser. The present invention has been achieved based on these findings.
(1) A resin phase with a fluorine atom content higher than that of the internal portion of the container wall is provided in the inner surface portion of the container wall.
(2) The top portion and the bottom portion of the container are formed of a resin composition including a resin and a hindered amine compound having a transmittance of light with a wavelength of 400 nm measured for a 5 wt% chloroform solution using a cell with 10-mm optical path of 90% or more and a molecular weight of 1500 or more.
(3) Since a CVD film formed of a fluorocarbon compound has insulating properties and water repellency and can be formed to an extremely small thickness, the inner surface of the container in which the liquids differing in refractive index are enclosed is coated with the CVD film.

According to a first aspect of the present invention, an optical element is provided which comprises a first liquid, a second liquid, and a container, the first liquid and the second liquid substantially differing in refractive index and being immiscible, the container being a resin container of which an inner surface portion of a container wall has a resin phase with a fluorine atom content higher than that of an internal portion of the container wall, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

According to a second aspect of the present invention, an optical element is provided which comprises a first liquid, a second liquid, and a container, the first liquid and the second liquid substantially differing in refractive index and being immiscible, a top portion and a bottom portion of the container being formed of a resin composition including a resin and a hindered amine compound having a transmittance of light with a wavelength of 400 nm measured for a 5 wt% chloroform solution using a cell with 10-mm optical path of 90% or more and a molecular weight of 1500 or more, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

According to a third aspect of the present invention, an optical element is provided which comprises a first liquid, a second liquid, and a container, the first liquid and the second liquid substantially differing in refractive index and being immiscible, an inner surface of the container being coated with a CVD film formed of a fluorocarbon compound, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

In the optical element according to the present invention, it is preferable that (i) the container is made of an alicyclic structure-containing polymer resin, (ii) the container have an inner surface of a side portion with a contact angle of water of 105 degrees or more, and/or (iii) the top portion or the bottom portion of the container is formed in a shape of a lens, a prism, a holographic surface, or a Fresnel lens.
In the optical element according to the present invention, it is preferable that both of the first liquid and the second liquid are electrically-conductive or polar liquids.

The optical element according to the present invention includes the container which exhibits excellent water repellency and antifouling effects. Therefore, the shape of the liquid interface contacting the inner surface of the container does not become unstable, and the response to the applied voltage is increased. Since the reflectance of the inner surface of the container is decreased, a problem is prevented in which light incident on the optical element is undesirably reflected by the inner surface of the optical element.
Since the optical element according to the present invention uses the container made of the alicyclic structure-containing polymer resin, the enclosed liquids are not absorbed by the container and do not erode or swell the container, whereby a change in optical properties due to a change in the shape of the container occurs to only a small extent.

The container of the optical element according to the first invention is made of a resin and has a resin phase with a high fluorine atom content in the inner surface portion of the container wall. Therefore, since the entire container is formed of a uniform resin and an interface between different materials such as that formed in a laminate does not exist, microcracks and the like do not occur, whereby the container exhibits excellent mechanical strength.

The portions of the optical element according to the second invention through which light passes (i.e. the top portion and the bottom portion of the container) are formed of the resin composition including a resin and a hindered amine compound having a transmittance of light with a wavelength of 400 nm measured for a 5 wt% chloroform solution using a cell with 10-mm optical path of 90% or more and a molecular weight of 1500 or more.

Therefore, when causing light from a short-wavelength laser such as a blue laser with a wavelength of 350 nm to 530 nm to pass through the optical element, ablation does not occur on the surface and the lens does not become clouded. Moreover, since the enclosed liquids are not absorbed by the container and do not erode or swell the container, a change in optical properties due to a change in the shape of the container occurs to only a small extent. Moreover, the optical element allows continuous transmission or concentration of light from a blue laser (short-wavelength laser), and allows the refractive power to be efficiently controlled with a small configuration utilizing the electrowetting phenomenon.

In the optical element according to the third invention, the inner surface of the container is coated with the CVD film formed of a fluorocarbon compound. Since the CVD film formed of a fluorocarbon compound has a very low relative dielectric constant so that a propagation delay of an alternating wave occurs to only a small extent, the response is extremely high. Moreover, since the CVD film formed of a fluorocarbon compound exhibits excellent insulating properties and can be formed to a small thickness, voltage response properties can be improved by replacing a thick container made of a resin insulator with the container according to the present invention. Furthermore, since the CVD film of a fluorocarbon compound exhibits excellent water repellency, it is unnecessary to provide the surface of the insulator with a water-repellent treatment. Therefore, the shape of the liquid interface contacting the inner surface of the container does not become unstable, and the response to the applied voltage becomes higher.

### BRIEF DESCRIPTION OF THE DRAWINGS

FIG. 1 is a view showing an example of a device for producing a container for an optical element according to the present invention.
FIG. 2 is a view showing an example of an optical element according to the present invention.

### BEST MODE FOR CARRYING OUT THE INVENTION

The optical elements according to the present invention are described below in detail.
The optical element according to the present invention includes a first liquid, a second liquid, and a container, wherein the first liquid and the second liquid substantially differ in refractive index and are immiscible, the first liquid and the second liquid are hermetically placed in the container so that the interface between the first liquid and the second liquid forms a specific shape (preferably a curved surface), and the shape of the liquid interface is changed by applying a voltage between the first liquid and the second liquid through electrodes formed in the container.

In the optical element according to the present invention, the refractive power for light passing through the optical element is adjusted by changing the shape of the liquid interface by applying a voltage between the first liquid and the second liquid through the electrodes formed in the container. The optical element according to the present invention allows the shape of the interface (curvature of interface) to be continuously changed by changing the degree to which the first liquid pushes the second liquid by adjusting the voltage value, whereby the focal length can be continuously changed by adjusting the voltage value.

### (First liquid and second liquid)

The optical element according to the present invention includes the first liquid and the second liquid which substantially differ in refractive index and are immiscible. Specifically, the refractive index of the first liquid substantially differs from the refractive index of the second liquid. It is preferable that the refractive index of the second liquid be higher than the refractive index of the first liquid. The first liquid and the second liquid do not mix together (i.e. are immiscible).

In the optical element according to the present invention, it is preferable that both of the first liquid and the second liquid are electrically-conductive or polar liquids.

As specific examples of the first liquid, an electrically-conductive liquid and an electrically-conductive gel can be given.
Examples of the electrically-conductive liquid include a liquid exhibiting electric conductivity such as aqueous solution of an inorganic salt and an organic liquid, and a liquid which exhibits electric conductivity by the addition of an ionic component.

The electrically-conductive gel contains the above electrically-conductive liquid and a gelling agent.
Examples of the gelling agent include a polymer material having a polar group such as hydroxyl group, carboxyl group, sulfoxyl group, amide group, or ether group in the side chain or the main chain, and a self-organization or self-integration substance which forms an aggregate having a geometrically-ordered structure due to the interaction between weak intermolecular forces (e.g. hydrogen bond, ionic bond, hydrophobic bond, electrostatic force, and Van der Waals force).

Specific examples of the polymer material include polyvinyl alcohol, polyethylene glycol, polyhydroxyethyl methacrylate, polyacrylic acid, polystyrenesulfonic acid, polymethyl vinyl ether, and polyacrylamide; polysaccharides such as starch, alginic acid, and agar; a natural gum material and proteins such as gelatin, polypeptide, collagen, and casein; and the like.

Specific examples of the self-organization or self-integration substance include substances having a steroid structure such as sodium deoxycholate and a substance which forms helix fibers due to a pH adjusting agent to form a gel due to the helix chain structure.

As specific examples of the second liquid, insulating liquids such as silicone oil and paraffin oil can be given.

### (Container)

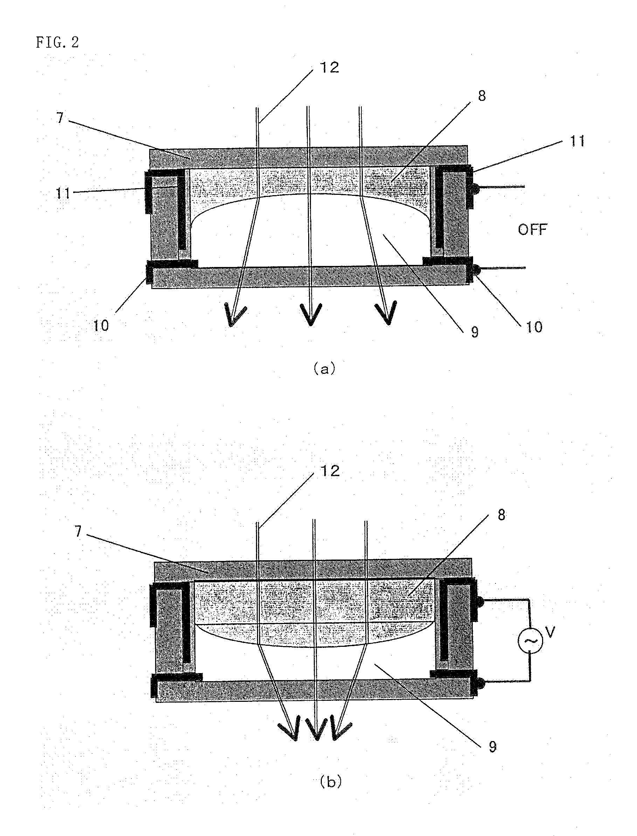

The optical element according to the present invention includes the container in which the first liquid and the second liquid are hermetically placed so that the interface between the first liquid and the second liquid forms a specific shape.
The container used for the optical element according to the present invention includes a tubular side portion, and a top portion and a bottom portion which close the openings of the tube.
The shape of the container used for the optical element according to the present invention is not particularly limited. The container may be a tubular container of which the bottom portion and the top portion are flat, as shown in FIG. 2, or may be a tubular container of which the bottom portion or the top portion shown in FIG. 2 is formed in the shape of a lens, a prism, a Fresnel lens, a holographic surface, or the like.

The material for the side portion of the container used in the present invention is not particularly limited. As examples of the material for the side portion, an inorganic material such as glass and an organic material such as a resin can be given.

It is preferable that the side portion have an inner surface with a contact angle of water of 105 degrees or more or an inner surface of which the contact angle of water gradually changes.

The method of increasing the contact angle of water or the method of gradually changing the contact angle of water is not particularly limited. For example, method of fluorinating the surface portion by causing the surface portion to contact a fluorine gas-containing atmosphere, method of forming a CVD film of a fluorocarbon compound, method of applying a fluororesin, and the like can be given. The first liquid is prevented from remaining as droplets on the inner surface of the side portion in the region of the second liquid when the first liquid is withdrawn by increasing the water repellency of the inner surface. Moreover, deformation rarely occurs in the portion in which the interface between the first liquid and the second liquid contacts the inner surface of the side portion.

It is preferable that the inner surface of the top portion and/or the bottom portion of the container (preferably the inner surface of the top portion or the bottom portion contacting the first liquid) exhibit hydrophilicity.

If the inner surface of the top portion or the bottom portion contacting the first liquid is made hydrophilic, the second liquid is prevented from remaining as droplets on the inner surface of the top portion or the bottom portion in the region of the first liquid after the interface between the first liquid and the second liquid has become unstable due to unexpected impact. The degree of hydrophilization is not particularly limited. It is preferable to adjust the degree of hydrophilization so that the contact angle of water is 95 degrees or less.

The method of hydrophilizing the inner surface of the top portion and/or the bottom portion of the container is not particularly limited. For example, method of hydrophilizing the surface portion by causing the surface portion to contact an atmosphere containing oxygen or water and a fluorine gas, method of applying a hydrophilic resin, and the like can be given.

The optical element according to the present invention includes the first liquid, the second liquid, and the container, wherein the container is (1) a resin container of which the inner surface portion of the container wall has a resin phase with a fluorine atom content higher than that of the internal portion of the container wall (container for the first invention), (2) a container of which the top portion and the bottom portion are formed of a resin composition including a resin and a hindered amine compound having a transmittance of light with a wavelength of 400 nm measured for a 5 wt% chloroform solution using a 10-mm optical path cell of 90% or more and a molecular weight of 1500 or more (container for the second invention), or (3) a container of which the inner surface is coated with a CVD film formed of a fluorocarbon compound (container for the third invention).

The resin forming the above containers is transparent to light with a desired wavelength. It is preferable that the resin used for the container not absorb the liquid enclosed in the container. Specifically, a resin is suitable which has a water absorption (ASTM D570) of preferably 0.05% or less, and more preferably 0.01% or less.

### (Container for the first invention)

In the container for the first invention used for the optical element according to the present invention, the inner surface portion of the container wall of the container has a resin phase with a fluorine atom content higher than that of the internal portion of the resin container.

The term "inner surface portion of the container wall of the container" used herein refers to a portion with a depth of about several nanometers to several micrometers from the surface of the container. Specifically, the internal portion and the inner surface portion of the container wall for the first invention are formed of the same type of resin without a layer interface formed in between, and the inner surface portion has a fluorine atom content higher than that of the internal portion. The fluorine atom content may be distributed so that the fluorine atom content gradually decreases from the surface portion toward the inner portion, or may be distributed so that the fluorine atom content decreases stepwise from the surface portion toward the inner portion. The fluorine atom content may be measured using an analytical means such as X-ray photoelectron spectroscopy (electron spectroscopy for chemical analysis (ESCA)).

As examples of the transparent resin, an alicyclic structure-containing polymer resin, an acrylic resin, a polycarbonate resin, a polyester resin, a polyolefin resin, and the like can be given. These resins may be used either individually or in combination of two or more. In the present invention, the alicyclic structure-containing polymer resin is preferable.

The alicyclic structure-containing polymer resin is a polymer having an alicyclic structure in the main chain and/or the side chain. An alicyclic structure-containing polymer resin having an alicyclic structure in the main chain is preferable from the viewpoint of mechanical strength, heat resistance, and the like. As examples of the alicyclic structure, a cycloalkane structure, a cycloalkene structure, and the like can be given. Of these, the cycloalkane structure is preferable from the viewpoint of mechanical strength, heat resistance, and the like.

As examples of the alicyclic structure, a monocyclic structure, a polycyclic structure, a condensed polycyclic structure, a crosslinked cyclic structure, and the like can be given. Although the number of carbon atoms forming the alicyclic structure is not particularly limited, mechanical strength, heat resistance, and moldability are highly balanced when the number of carbon atoms is usually 4 to 30, preferably 5 to 20, and more preferably 5 to 15.
The alicyclic structure-containing polymer resin used in the present invention is usually thermoplastic.

The alicyclic structure-containing polymer resin usually includes a repeating unit derived from an olefin having an alicyclic structure (hereinafter may be called "alicyclic olefin").
The content of the repeating units derived from the alicyclic olefin in the alicyclic structure-containing polymer resin is appropriately selected depending on the application. The content of the structural units derived from the alicyclic olefin is usually 30 to 100 wt%, preferably 50 to 100 wt%, and more preferably 70 to 100 wt%. If the content of the structural units derived from the alicyclic olefin is too low, heat resistance deteriorates.
A repeating unit other than the repeating unit derived from the alicyclic olefin is not particularly limited, and is appropriately selected depending on the application.

The alicyclic structure-containing polymer resin may have a polar group. As examples of the polar group, a hydroxyl group, a carboxyl group, an alkoxy group, an epoxy group, a glycidyl group, an oxycarbonyl group, a carbonyl group, an amino group, an ester group, a carboxylic anhydride residue, an amide group, an imide group, and the like can be given. In particular, an ester group, a carboxyl group, or a carboxylic anhydride residue is preferable.

The alicyclic structure-containing polymer resin is generally obtained by addition polymerization or ring-opening polymerization of an alicyclic olefin and optionally hydrogenating an unsaturated bond, or addition polymerization of an aromatic olefin and hydrogenating an aromatic ring of the resulting polymer. An alicyclic structure-containing polymer resin having a polar group is obtained by introducing a polar group into the above alicyclic structure-containing polymer resin through a modification reaction using a compound having a polar group, or copolymerizing the above alicyclic structure-containing polymer resin with a monomer having a polar group as a copolymerization component, for example.

Examples of the alicyclic olefin used to obtain the alicyclic structure-containing polymer resin include unsaturated hydrocarbons having a polycyclic structure such as norbornene, dicyclopentadiene, tetracyclododecene, ethyltetracyclododecene, ethylidenetetracyclododecene, tetracyclo[7.4.0.1^{10,13}.0^{2,7}] trideca-2,4,6,11-tetraene, and 1,4-methano-1,4,4a,9a-tetrahydrofluorene and derivatives thereof; unsaturated hydrocarbons having a monocyclic structure such as cyclobutene, cyclopentene, cyclohexene, 3,4-dimethylcyclopentene, 3-methylcyclohexene, 2-(2-methylbutyl)-1-cyclohexene, cyclooctene, cycloheptene, cyclopentadiene, and cyclohexadiene and derivatives thereof; and the like. These alicyclic olefins may have a polar group as a substituent.
As examples of the aromatic olefin, styrene, α-methylstyrene, divinylbenzene, and the like can be given.
The alicyclic olefins and/or the aromatic olefins may be respectively used either individually or in combination of two or more.

A monomer copolymerisable with the alicyclic olefin or the aromatic olefin may be subjected to addition copolymerization with the alicyclic olefin or the aromatic olefin, as required.
Specific examples of the monomer copolymerisable with the alicyclic olefin or the aromatic olefin include α-olefins having 2 to 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene; nonconjugated dienes such as 1,4-hexadiene, 4-methyl-1,4-hexadiene, 5-methyl-1,4-hexadiene, and 1,7-octadiene; conjugated dienes such as 1,3-butadiene and isoprene; and the like. These monomers may be used either individually or in combination of two or more.

The alicyclic olefin and/or the aromatic olefin may be polymerized using an ordinary method.
The polymerization temperature is usually -50°C to +100°C, although the polymerization temperature is not particularly limited.
The polymerization pressure (applied pressure) is usually 0 to 5×10³ Pa (0 to 50 kgf/cm²), although the polymerization pressure is not particularly limited.
The hydrogenation reaction may be carried out by blowing hydrogen in the presence of a hydrogenation catalyst.

Specific examples of the alicyclic structure-containing polymer resin include a ring-opening polymer of norbomene monomers and a hydrogenated product thereof, an addition polymer of norbomene monomers, an addition polymer of norbornene monomers and a vinyl compound (= ethylene, α-olefin, and the like), a monocyclic cycloalkene polymer, a polymer of alicyclic conjugated diene monomers and a hydrogenated product thereof, a polymer of vinyl alicyclic hydrocarbon monomers and a hydrogenated product thereof, an aromatic ring hydrogenated product of an aromatic olefin polymer, and the like.

Of these, the ring-opening polymer of norbomene monomers and a hydrogenated product thereof, the addition polymer of norbornene monomers, the addition polymer of norbomene monomers and a vinyl compound, and the aromatic ring hydrogenated product of an aromatic olefin polymer are preferable, with the hydrogenated product of the ring-opening polymer of norbomene monomers being particularly preferable.
The alicyclic structure-containing polymer resins may be used either individually or in combination of two or more.

The molecular weight of the resin used in the present invention is not particularly limited. The polystyrene-reduced weight average molecular weight (Mw) of the resin measured by gel permeation chromatography (GPC) using cyclohexane as a solvent (or toluene when the resin is not dissolved in cyclohexane) is usually 1000 to 1,000,000, preferably 5000 to 500,000, and more preferably 10,000 to 250,000. If the weight average molecular weight (Mw) of the resin is within this range, weatherability, bondability, surface flatness (smoothness), and the like are well balanced.

The molecular weight distribution of the resin indicated by the ratio (Mw/Mn) of the weight average molecular weight (Mw) to the number average molecular weight (Mn) measured by gel permeation chromatography (GPC) using cyclohexane as a solvent (or toluene when the resin is not dissolved in cyclohexane) is usually 5 or less, preferably 4 or less, and more preferably 3 or less.

The glass transition temperature of the resin may be arbitrarily selected depending on the application. The glass transition temperature of the resin is preferably 70°C or more, more preferably 95°C or more, and most preferably 120°C or more.

It is preferable that the resin has a volatile content of 0.5 wt% or less in order to obtain an optical element containing a small amount of volatile components such as water and organic substance. The term "volatile content" used herein refers to the amount of components which volatilize when heating the resin from 30°C to 350°C at a rate of 10°C/min using a differential thermogravimetric analyzer (e.g. TG/DTA200 manufactured by Seiko Instruments Inc.).

The method of reducing the volatile content is not particularly limited. For example, method of removing water and an organic substance from a polymer solution together with a solvent using a coagulation method or direct drying method described later, steam stripping method, reduced pressure stripping method, nitrogen stripping method, and the like can be given. In particular, the coagulation method and the direct drying method exhibit high productivity.

The coagulation method is a method of mixing a polymer solution with a poor solvent for the polymer to precipitate the polymer.
Examples of the poor solvent include polar solvents such as alcohols such as ethyl alcohol, n-propyl alcohol, and isopropyl alcohol; ketones such as acetone and methyl ethyl ketone; and esters such as ethyl acetate and butyl acetate.

After causing solid-liquid separation to occur by coagulation, the resulting small polymer crumb is dried by heating to remove the solvent. The pressure during drying is usually 10 kPa or less, and preferably 3 kPa or less. The heating temperature is usually 260°C or more, and preferably 280°C or more.

The direct drying method is a method of removing a solvent by heating a polymer solution under reduced pressure. This method may be carried out using a centrifugal thin-film continuous vaporization dryer, a surface-scraping heat-exchange continuous reactor dryer, a high-viscosity reactor, or the like. The degree of vacuum and the temperature may be appropriately selected depending on the device.

The resin used may appropriately contain an antioxidant, a light stabilizer, a coloring agent such as a pigment and dye, a fluorescent whitening agent, a dispersant, a thermal stabilizer, a UV absorber, a near-infrared absorber, an antistatic agent, a lubricant, a solvent, a plasticizer, a release agent, an elastomer, a flame retardant, a coupling agent, and the like.

A resin containing an antioxidant and/or a light stabilizer is preferable.
As examples of the antioxidant, a phenol antioxidant, a phosphorus antioxidant, a sulfur antioxidant, and the like can be given. Of these, the phenol antioxidant, particularly an alkyl-substituted phenol antioxidant is preferable.

Examples of the phenol antioxidant include alkyl-substituted phenol compounds such as octadecyl-3-(3,5-di-t-butyl-4-hydroxyphenyl)propionate, 2,2'-methylene-bis(4-methyl-6-t-butylphenol), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakismethylene-3-(3',5'-di-t-butyl-4'-hydroxyphenyl propionate)methane[pentaerythrityl-tetrakis-3-(3,5-di-t-butyl-4-hydroxyphenyl propionate)]; acrylate compounds such as 2-t-butyl-6-(3-t-butyl-2-hydroxy-5-methylbenzyl)-4-methylphenyl acrylate and 2,4-di-t-amyl-6-{1-(3,5-di-t-amyl-2-hydroxyphenyl)ethyl}phenyl acrylate; triazine group-containing phenol compounds such as 6-(4-hydroxy-3,5-di-t-butylanilino)-2,4-bisoctylthio-1,3,5-triazine and 4-bisoctylthio-1,3,5-triazine; and the like.

Examples of the phosphorus antioxidant include monophosphite compounds such as triphenyl phosphite, diphenyl isodecyl phosphite, phenyl diisodecyl phosphite, tris(nonylphenyl) phosphite, tris(dinonylphenyl) phosphite, and tris(2,4-di-t-butylphenyl) phosphite; diphosphite compounds such as 4,4'-butylidene-bis(3-methyl-6-t-butylphenyl-di-tridecyl phosphite); and the like.

Examples of the sulfur antioxidant include dilauryl 3,3'-thiodipropionate, dimyristyl 3,3'-thiodipropionate, distearyl 3,3'-thiodipropionate, laurylstearyl 3,3'-thiodipropionate, and the like.
These antioxidants may be used either individually or in combination of two or more.

The antioxidant is used in an amount of usually 0.01 to 2 parts by weight, preferably 0.02 to 1 part by weight, and more preferably 0.05 to 0.5 parts by weight for 100 parts by weight of the resin.

As examples of the light stabilizer, a hindered amine light stabilizer (HALS), a benzoate light stabilizer, and the like can be given. Of these, the hindered amine light stabilizer is preferable.

Specific examples of the hindered amine light stabilizer include bis(2,2,6,6-tetramethyl-4-piperidyl)sebacate, bis(1,2,2,6,6-pentamethyl-4-piperidyl)sebacate, 1-[2- {3-(3,5-di-t-butyl-4-hydroxyphenyl)propionyloxy} ethyl]-4-{3-(3,5-di-t-butyl-4-hydroxyphenyl)propionyloxy}-2,2,6,6-tetramethylpiperidine, 8-benzyl-7,7,9,9-tetramethyl-3-octyl-1,2,3-triazaspiro[4,5]undecane-2,4-dione, 4-benzoyloxy-2,2,6,6-tetramethylpiperidine, a polycondensate of dimethyl succinate and 1-(2-hydroxyethyl)-4-hydroxy-2,2,6,6-tetramethylpiperidine, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], N,N'-bis(3-aminopropyl)ethylenediamine-2,4-bis[N-butyl-N-(1,2,2,6,6-pentamethyl-4-piperidyl)amino]-6-chloro-1,3,5-triazine condensate,

tetrakis(2,2,6,6-tetramethyl-4-piperidyl)-1,2,3,4-butane tetracarboxylate, a condensate of 1,2,3,4-butanetetracarboxylic acid, 1,2,2,6,6-tetramethyl-4-piperidinol, and tridecyl alcohol, N,N',N",N"'-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine, 1,3,5-triazine, and N,N'-bis(2,2,6,6-tetramethyl-4-piperidyl)butylamine, poly[{(1,1,3,3-tetramethylbutyl)amino-1,3,5-triazine-2,4-diyl }{(2,2,6,6-tetramethyl-4-piperidyl)imino}hexamethylene{(2,2,6,6-tetramethyl-4-piperidyl)imino}], a polycondensate of 1,6-hexanediamine-N,N'-bis(2,2,6,6-tetramethyl-4-piperidyl) and morpholine-2,4,6-trichloro-1,3,5-triazine, poly[(6-morpholino-s-triazine-2,4-diyl)[(2,2,6,6-tetramethyl-4-piperidyl)imino]-hexamethylene[(2,2,6,6-tetramethyl-4-piperidyl)imino]], a polymer of dimethyl succinate and 4-hydroxy-2,2,6,6-tetramethyl-1-piperidineethanol, a mixed ester of 1,2,3,4-butanetetracarboxylic acid, 1,2,2,6,6-pentamethyl-4-piperidinol, and 3,9-bis(2-hydroxy-1,1-dimethylethyl)-2,4,8,10-tetraoxaspiro[5,5]undecane, and the like.
These light stabilizers may be used either individually or in combination of two or more.

Of these, light stabilizers having a number average molecular weight of 2000 to 5000 are preferable, such as the polycondensate of dibutylamine, 1,3,5-triazine, and N,N'-bis(2,2,6,6-tetramethyl-4-piperidyl)butylamine, poly[{(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], and the polymer of dimethyl succinate and 4-hydroxy-2,2,6,6-tetramethyl-1-piperidineethanol.

The light stabilizer is used in an amount of usually 0.0001 to 5 parts by weight, preferably 0.001 to 1 part by weight, and more preferably 0.01 to 0.5 parts by weight for 100 parts by weight of the resin.

The method of producing the container for the first invention is not particularly limited insofar as a resin container can be obtained of which the inner surface portion of the container wall has a resin phase with a fluorine atom content higher than that of the internal portion of the container wall. It is preferable to use a production method including causing the inner surface of a container base material made of a resin to contact a fluorine gas-containing atmosphere.

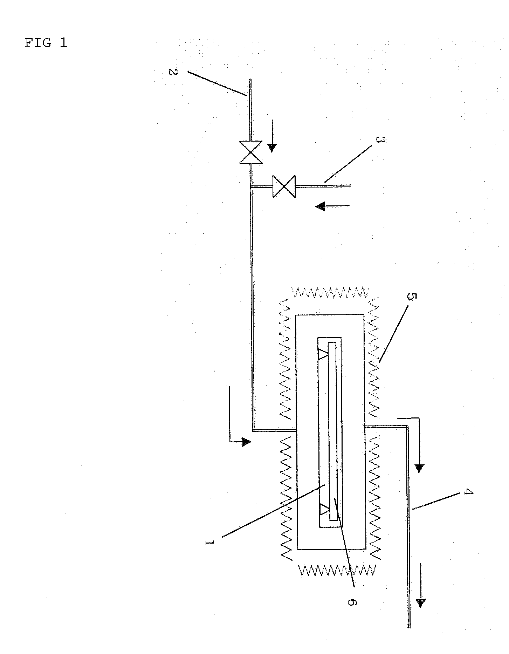

This method may be carried out using a reactor shown in FIG. 1, for example.
The reactor includes a chamber 1 and a heating device 5 for controlling the temperature of the chamber. A fluorine gas supply line 2 and an inert gas supply line 3 for introducing a fluorine gas and an inert gas are connected with the chamber 1. An exhaust line 4 for removing unnecessary gas is also connected with the chamber 1. A chamber made of stainless steel or aluminum is preferable as the chamber 1.

The chamber 1 is provided with a space for placing the container base material, in which container base materials of various shapes can be placed.
The gas removed through the exhaust line 4 may be recycled by returning the gas to the respective gas supply lines either directly or after separation and purification.

A container base material 6 may be molded into a shape suitable for the optical element according to the present invention. For example, the container of the optical element shown in FIG. 2 is obtained by molding the resin into a tubular shape. In this case, since the dimensions of the container base material are changed to a small extent when causing the container base material to contact a fluorine gas-containing atmosphere to introduce fluorine atoms into the base material, it is preferable to mold the container base material into dimensions and a shape so that a desired container is obtained, taking a change in dimensions into consideration.

The resulting container base material is subjected to surface treatment in the subsequent step, whereby the container for the optical element according to the present invention can be suitably produced. The container may be masked in order to allow only the inner surface of the container to contact a fluorine gas-containing atmosphere.

In more detail, the container for the first invention may be produced by the following steps.
(a) Step of allowing resin container base material to stand in inert gas atmosphere or under reduced pressure;
   In the step (a), the container base material is placed in the chamber 1. After closing the chamber 1, the valve of the inert gas supply line 3 is opened to allow an inert gas to flow into the chamber 1.

As examples of the inert gas, argon, nitrogen, helium, neon, krypton, xenon, and the like can be given. In the present invention, argon is suitably used.

It is preferable to heat the container base material in the chamber using the heating device in a state in which the chamber 1 is filled with the inert gas atmosphere. This heating efficiently removes water, oxygen, and volatile components contained in the container base material. The heating temperature is usually 60 to 180°C, and preferably 80 to 130°C as the surface temperature of the container base material. The heating time is usually 1 to 360 minutes, and preferably 2 to 200 minutes.

The container base material may be allowed to stand under reduced pressure instead of under the inert gas atmosphere. When allowing the container base material to stand under reduced pressure, the pressure is adjusted to usually 6.6×10⁴ Pa (500 mmHg) or less, and preferably 1.3×10⁴ Pa (100 mmHg) or less. The lower limit of the pressure is 1.3 ×10² Pa (1 mmHg). If the pressure is reduced to a large extent, contaminants such as oil and water may be diffused from the exhaust system.

It is also preferable to heat the container base material when allowing the container base material to stand under reduced pressure. The heating temperature is usually 15 to 100°C. It is preferable to inject a high-purity inert gas while reducing pressure, since oxygen and water can be efficiently removed. The decompression time is usually 1 to 360 minutes, and preferably 2 to 200 minutes.

Since the surface of the container is easily hydrophilized if oxygen and water exist in the container base material in the subsequent step (b), it is preferable to reduce the amounts of oxygen and water in the step (a). The amounts of oxygen and water in the container base material are usually 1 wt% or less, preferably 100 ppm by weight or less, and more preferably 10 ppm by weight or less.

Although the step (a) need not necessarily be performed, it is preferable to perform the step (a) since the resin phase with a high fluorine atom content can be formed in the surface portion of the container wall without an in-plane distribution.

(b) Step of causing surface of container base material to contact fluorine gas-containing atmosphere;
   After the step (a), the valve of the inert gas supply line 3 is closed, and the inside of the chamber 1 is cooled, if necessary. The valve of the fluorine gas supply line 2 (and the valve of the inert gas supply line 3, if necessary) is opened to cause a fluorine gas to flow into the chamber 1, whereby the chamber 1 is filled with a fluorine gas-containing atmosphere.

The fluorine gas-containing atmosphere may contain only a fluorine gas. In order to ensure a moderate reaction, it is preferable that the fluorine gas-containing atmosphere contain a fluorine gas diluted with an inert gas. It is preferable that the fluorine gas-containing atmosphere not contain oxygen and water. In more detail, it is preferable that the amounts of oxygen and water be 100 ppm by weight or less, more preferably 10 ppm by weight or less, and particularly preferably 1 ppm by weight or less.

The fluorine gas is diffused into the surface portion and the internal portion of the container base material from the surface of the container base material by causing the fluorine gas-containing atmosphere to contact the surface of the container base material. As a result, fluorine atoms are introduced into the resin, whereby the fluorine atom content in the resin forming the container base material is increased. The penetration depth of fluorine atoms from the surface of the container base material and the fluorine atom content vary depending on the fluorine gas concentration, the contact temperature, and the contact time.

The concentration of the fluorine gas diluted with the inert gas is usually 0.1 to 50 wt%, preferably 0.1 to 30 wt%, and more preferably 0.1 to 20 wt%. The temperature of the surface of the container base material when causing the surface of the container base material to contact the fluorine gas-containing atmosphere is usually -50 to +150°C, preferably -20 to +80°C, and particularly preferably 0 to 50°C, although the temperature is not particularly limited.
The contact time is usually 0.1 second to 600 minutes, preferably 0.5 seconds to 300 minutes, and more preferably 1 second to 200 minutes.

The higher the fluorine gas concentration, or the higher the contact temperature, or the longer the contact time, the larger the penetration depth of fluorine atoms and the higher the fluorine atom content.
Since the refractive index of the portion (mainly the surface portion) into which fluorine atoms are introduced is decreased as the fluorine atom content is increased, the refractive index can be controlled to a desired value by appropriately selecting the fluorine gas concentration, the contact temperature, and the contact time.

In order to reduce the reflectance, it is preferable to adjust the difference between the refractive index of the surface portion (outermost surface: portion with the highest fluorine atom content) and the refractive index of the internal portion (portion with a fluorine atom content of zero) to 0.001 or more, and preferably 0.01 or more.

The resin forming the container base material deteriorates when the fluorine gas concentration is extremely high, or when the contact temperature is extremely high and the contact time is long. Therefore, it is preferable to cause the container base material to contact the fluorine gas at the above-mentioned concentration and temperature for the above-mentioned period of time.

(c) Step of allowing container base material subjected to step (b) to stand in inert gas atmosphere or under reduced pressure after causing container base material to contact fluorine gas;
   When a specific period of time has elapsed after causing the container base material to contact the fluorine gas, the chamber 1 is filled with an inert gas atmosphere by opening the inert gas supply line 3 and closing the valve of the fluorine gas supply line 2. As the inert gas, the inert gas described for the step (a) can be given.

In this case, it is preferable to heat the container base material using the heating device. Unnecessary fluorine gas which cannot be introduced into the container base material can be removed by this heating. The heating temperature is usually 60 to 180°C, and preferably 80 to 130°C as the surface temperature of the container base material. The heating time is usually 1 to 360 minutes, and preferably 2 to 200 minutes.

The container base material may be allowed to stand under reduced pressure instead of under the inert gas atmosphere. When allowing the container base material to stand under reduced pressure, the pressure is adjusted to usually 6.6×10⁴ Pa (500 mmHg) or less, and preferably 1.3×10⁴ Pa (100 mmHg) or less. The lower limit of the pressure is 1.3×10² Pa (1mmHg). If the pressure is reduced to a large extent, contaminants such as oil and water may be reversely diffused from the exhaust system.

It is preferable to heat the container base material when allowing the container base material to stand under reduced pressure. The heating temperature is usually 15 to 100°C. It is preferable to inject a high-purity inert gas while reducing pressure, since the fluorine gas can be efficiently removed. The decompression time is usually 1 to 360 minutes, and preferably 2 to 200 minutes.

Although the step (c) need not necessarily be performed, it is preferable to perform the step (c) since the resin phase with a high fluorine atom content can be formed in the surface portion of the container without an in-plane distribution.
After the completion of the step (c), the container is removed from the chamber 1 and used for each application.

### (Container for the second invention)

The container for the second invention used for the optical element according to the present invention is a container of which the top portion and the bottom portion are formed of a resin composition including a resin and optionally a hindered amine compound having a transmittance of light with a wavelength of 400 nm measured for a 5 wt% chloroform solution using a cell with 10-mm optical path of 90% or more and a molecular weight of 1500 or more.

The material forming the top portion and the bottom portion of the container for the second invention has a transmittance of light with a wavelength of 405 nm measured for a flat sheet with a thickness of 1 mm of 90% or more, and a decrease in transmittance of light with a wavelength of 405 nm of 1% or less after applying light with a wavelength of 405 nm at a temperature of 25°C and an irradiation intensity of 4000 W/m² for an irradiation time of 2000 hours.

As examples of the resin, an alicyclic structure-containing polymer resin, an acrylic resin, a polycarbonate resin, a polyester resin, a polyolefin resin, and the like can be given. These resins may be used either individually or in combination of two or more.

Of these, the alicyclic structure-containing polymer resin and the acrylic resin are preferable.
The alicyclic structure-containing polymer resin includes a repeating unit derived from an alicyclic olefin and is usually thermoplastic in the same manner as the resin forming the container for the first invention.
As specific examples of the alicyclic structure-containing polymer resin, the resins given as examples of the resin forming the container for the first invention can be given.

As the alicyclic structure-containing polymer resin, a ring-opening polymer of norbornene monomers and a hydrogenated product thereof, an addition polymer of norbornene monomers, an addition polymer of norbornene monomers and a vinyl compound, and an aromatic ring hydrogenated product of an aromatic olefin polymer are preferable, with the hydrogenated product of the ring-opening polymer of norbornene monomers being particularly preferable.

The acrylic resin for forming the top portion and the bottom portion of the container for the second invention is not particularly limited. As examples of the acrylic resin, a homopolymer of a (meth)acrylate compound, a copolymer of two or more (meth)acrylate compounds, a copolymer of a (meth)acrylate compound and other copolymerizable monomers, and the like can be given. The term "(meth)acrylate" used herein refers to acrylate or methacrylate.

The molecular weight of the resin used for the container for the second invention is not particularly limited. When the resin is a block copolymer, the weight average molecular weight (Mw) of the block copolymer is 50,000 to 300,000, preferably 55,000 to 200,000, and particularly preferably 60,000 to 150,000. When the resin is a random copolymer or a homopolymer, the weight average molecular weight (Mw) of the resin is usually 5000 to 500,000, and preferably 10,000 to 200,000. If the weight average molecular weight (Mw) is too low, mechanical strength may become insufficient. If the weight average molecular weight (Mw) is too high, the polymer tends to be thermally decomposed due to an increase in molding time, whereby the amount of organic substance released tends to be increased.

The molecular weight distribution of the resin indicated by the ratio (Mw/Mn) of the weight average molecular weight (Mw) to the number average molecular weight (Mn) is usually 2 or less, preferably 1.5 or less, and more preferably 1.2 or less. If the ratio (Mw/Mn) is within this range, mechanical strength and heat resistance are highly balanced. Note that the weight average molecular weight (Mw) and the number average molecular weight (Mn) are polystyrene-reduced molecular weights measured by gel permeation chromatography (GPC) using cyclohexane as a solvent (or toluene when the resin is not dissolved in cyclohexane).

The glass transition temperature of the resin may be appropriately selected depending on the application. The glass transition temperature of the resin is preferably 60 to 200°C, more preferably 70 to 180°C, and most preferably 90 to 170°C. If the glass transition temperature is too low, heat resistance tends to be decreased. If the glass transition temperature is too high, processability tends to deteriorate. Note that the glass transition temperature is a value measured using a differential scanning calorimeter.

It is preferable that the resin has a volatile content of 0.5 wt% or less in order to obtain an optical element containing a small amount of volatile components such as water and organic substances in the same manner as the resin forming the container for the first invention.

The hindered amine compound mixed with the resin has (a) a transmittance of light with a wavelength of 400 nm measured for a 5 wt% chloroform solution using a cell with 10-mm optical path (hereinafter simply called "light transmittance") of 90% or more, and preferably 94% or more, and (b) a molecular weight of 1500 or more, preferably 1500 to 10,000, and more preferably 1500 to 5000. If the light transmittance and the molecular weight are within the above ranges, excellent transparency to light from a blue laser can be stably obtained.

When the hindered amine compound is a polymer, the molecular weight refers to the number average molecular weight measured by gel permeation chromatography (GPC) using tetrahydrofuran as a solvent.

A preferred hindered amine compound is a hindered amine compound having two or more piperidine rings in which a substituent is bonded to each of two carbon atoms adjacent to the nitrogen atom. As the substituent bonded to the carbon atom adjacent to the nitrogen atom, alkyl groups such as methyl group and ethyl group are preferable. It is most preferable that methyl group be bonded to each of the carbon atoms adjacent to the nitrogen atom.

As examples of the hindered amine compound, the hindered amine light stabilizers described for the container for the first invention can be given.

Of these, a particularly preferred hindered amine compound is poly{[6-(1,1,3,3-tetramethylbutyl)amino-1,3,5-triazine-2,4-diyl] [(2,2,6,6-tetramethyl-4-piperidyl)imino]hexamethylene[(2,2,6,6-tetramethyl-4-piperidyl)imino]}.

Hindered amine compounds indicated by the same chemical formula and the same name may differ in light transmittance. When hindered amine compounds are polymers, the polymers may differ in number average molecular weight. It is necessary to increase the purity in order to increase the light transmittance, and it is necessary to adjust the catalyst, the reaction temperature, and the reaction time in order to increase the number average molecular weight.

For example, poly{[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]} having a molecular weight of 2,000 or more is commercially available as a product having a light transmittance of less than 90% and a product having a light transmittance of 90% or more, as described later in the examples.

The amount of the hindered amine compound used is usually 0.01 to 1.5 parts by weight, preferably 0.03 to 1.0 part by weight, and more preferably 0.05 to 0.5 parts by weight for 100 parts by weight of the resin. If the amount of the hindered amine compound is outside the above range, a sufficient effect cannot be obtained.

It is preferable to add an elastomer such as a main-chain hydrogenated product of a styrene-butadiene-styrene block copolymer (styrene-ethylene-butylene-styrene block copolymer (SEBS)) or a main-chain hydrogenated product of a styrene-isoprene-styrene block copolymer (styrene-ethylene-propylene-styrene block copolymer (SEPS)) to the resin.

The resin rarely becomes clouded at a high temperature and a high humidity, exhibits improved adhesion to a coating material and the like, and exhibits improved flatness and smoothness by adding the elastomer to the resin. It is preferable that the elastomer have a metal content of 50 ppm or less, and particularly preferably 30 ppm or less.
The amount of the elastomer used is usually 0.05 to 70 parts by weight, and preferably 0.1 to 50 parts by weight for 100 parts by weight of the resin.

In order to improve the mechanical properties of the resin, additives such as a filler (e.g. glass fibers, carbon fibers, metal fibers, metal flakes, glass beads, wollastonite, a rock filler, calcium carbonate, talc, silica, mica, glass flakes, milled fibers, kaolin, barium sulfate, graphite, molybdenum disulfide, magnesium oxide, zinc oxide whiskers, and potassium titanate whiskers), an antioxidant, a flame retardant, an antibacterial agent, wood powder, a coupling agent, a plasticizer, a coloring agent, a lubricant, silicone oil, a blowing agent, a surfactant, a release agent, and a UV absorber may be added to the resin.

As examples of the method of adding the component to the resin, method of kneading the resin and the hindered amine compound; method of mixing the resin and the hindered amine compound in an appropriate solvent and removing the solvent; and the like can be given.

A melt kneader such as single-screw extruder, twin-screw extruder, Banbury mixer, kneader, or feeder ruder may be used to knead the resin and the hindered amine compound. The kneading temperature is preferably 200 to 400°C, and more preferably 240 to 350°C. When kneading the resin and the hindered amine compound, the components may be kneaded all together, or may be kneaded while adding the components stepwise several times.

A preferred resin for forming the top portion and the bottom portion of the container for the second invention has a water vapor transmission rate at 40°C measured for a flat sheet with a thickness of 1 mm of 0.05 g/m².day or less.
The resin forming the top portion and the bottom portion of the container is transparent to light with a desired wavelength.
An optical element can be obtained which allows continuous transmission or concentration of light from a blue laser and of which the refractive power can be efficiently controlled with a small configuration utilizing the electrowetting phenomenon by using a resin exhibiting a low water absorption and a low water vapor transmission rate.

The container for the second invention can be produced by molding the resin into a shape suitable for the optical element according to the present invention. For example, the container of the optical element shown in FIG. 2 described later is obtained by molding the resin into a tubular shape.

### (Container for the third invention)

The container for the third invention used for the optical element according to the present invention is a container of which the inner surface is coated with a CVD film formed of a fluorocarbon compound.

The material forming the container for the third invention is not particularly limited. A material exhibiting excellent transparency is preferable. As the transparent material, a resin is suitable in comparison with glass from the viewpoint of moldability, reduced weight, and the like.

As examples of the transparent resin, an alicyclic structure-containing polymer resin, an acrylic resin, a polycarbonate resin, a polyester resin, a polyolefin resin, and the like can be given. In the present invention, the alicyclic structure-containing polymer resin is preferable.

The alicyclic structure-containing polymer resin includes a repeating unit derived from an alicyclic olefin and is usually thermoplastic in the same manner as the resin forming the container for the first invention.
As specific examples of the alicyclic structure-containing polymer resin, the resins given as examples of the resin forming the container for the first invention can be given.

As the alicyclic structure-containing polymer resin, ring-opening polymer of norbornene monomers and hydrogenated product thereof, addition polymer of norbornene monomers, addition polymer of norbornene monomers and a vinyl compound, and aromatic ring hydrogenated product of an aromatic olefin polymer are preferable, with the hydrogenated product of the ring-opening polymer of norbornene monomers being particularly preferable.

The molecular weight of the resin used is not particularly limited. The polystyrene-reduced weight average molecular weight (Mw) of the resin measured by gel permeation chromatography (GPC) using cyclohexane as a solvent (or toluene when the resin is not dissolved in cyclohexane) is usually 1000 to 1,000,000, preferably 5000 to 500,000, and more preferably 10,000 to 250,000. If the weight average molecular weight (Mw) of the resin is within this range, weatherability, bondability, surface flatness (smoothness), and the like are well balanced.

The molecular weight distribution of the resin indicated by the ratio (Mw/Mn) of the weight average molecular weight (Mw) to the number average molecular weight (Mn) measured by gel permeation chromatography (GPC) using cyclohexane as a solvent (or toluene when the resin is not dissolved in cyclohexane) is usually 5 or less, preferably 4 or less, and more preferably 3 or less.

The glass transition temperature of the resin may be appropriately selected depending on the application. The glass transition temperature of the resin is preferably 70°C or more, more preferably 95°C or more, and most preferably 120°C or more.

It is preferable that the resin used have a volatile content of 0.5 wt% or less in order to obtain an optical element containing a small amount of volatile components such as water and organic substances in the same manner as the resin forming the container for the first invention.

The resin used may appropriately contain a coloring agent such as a pigment and dye, a fluorescent whitening agent, a dispersant, a thermal stabilizer, a light stabilizer, a UV absorber, a near-infrared absorber, an antistatic agent, an antioxidant, a lubricant, a solvent, a plasticizer, a release agent, an elastomer, a flame retardant, a coupling agent, and the like.

A container before being coated with the CVD film can be obtained by molding the resin into a shape suitable for the optical element according to the present invention. For example, the container of the optical element shown in FIG. 2 described later is obtained by molding the resin into a tubular shape.

The CVD film formed of a fluorocarbon compound with which the inner surface of the container is coated is a thin film formed by CVD method using a fluorocarbon compound as the raw material.

The fluorocarbon compound used is a compound having carbon atoms and fluorine atoms omly. It is preferable that the fluorocarbon compound have a double bond or a triple bond. The number of carbon atoms including an aromatic olefin to undergo forming the fluorocarbon compound is preferably 2 to 7, more preferably 2 to 5, still more preferably 4 to 5, and particularly preferably 5.

Specific examples of the unsaturated fluorocarbon compound include unsaturated fluorocarbon compounds having two carbon atoms such as tetrafluoroethylene; unsaturated fluorocarbon compounds having three carbon atoms such as hexafluoropropene, tetrafluoropropyne, and tetrafluorocyclopropene; unsaturated fluorocarbon compounds having four carbon atoms such as hexafluoro-2-butyne, hexafluoro-1-butyne, hexafluorocyclobutene, hexafluoro-1,3-butadiene, hexafluoro-(1-methylcyclopropene), octafluoro-1-butene, and octafluoro-2-butene; unsaturated fluorocarbon compounds having five carbon atoms such as octafluoro-1-pentyne, octafluoro-2-pentyne, octafluoro-1,3-pentadiene, octafluoro-1,4-pentadiene, octafluorocyclopentene, octafluoroisoprene, hexafluorovinylacetylene, octafluoro-(1-methylcyclobutene), and octafluoro-(1,2-dimethylcyclopropene); unsaturated fluorocarbon compounds having six carbon atoms such as dodecafluoro-1-hexene, dodecafluoro-2-hexene, dodecafluoro-3-hexene, decafluoro-1,3-hexadiene, decafluoro-1,4-hexadiene, decafluoro-1,5-hexadiene, decafluoro-2,4-hexadiene, decafluorocyclohexene, hexafluorobenzene, octafluoro-2-hexyne, octafluoro-3-hexyne, octafluorocyclo-1,3-hexadiene, and octafluorocyclo-1,4-hexadiene; unsaturated fluorocarbon compounds having seven carbon atoms such as undecafluoro-1-heptene, undecafluoro-2-heptene, undecafluoro-3-heptene, and dodecafluorocycloheptene; and the like.

Of these, tetrafluoroethylene, hexafluoropropene, tetrafluoropropyne, tetrafluorocyclopropene, hexafluoro-2-butyne, hexafluoro-1-butyne, hexafluorocyclobutene, hexafluoro-1,3-butadiene, hexafluoro-(1-methylcyclopropene), octafluoro-1-butene, octafluoro-2-butene, octafluoro-1-pentyne, octafluoro-2-pentyne, octafluoro-1,3-pentadiene, octafluoro-1,4-pentadiene, octafluorocyclopentene, octafluoroisoprene, hexafluorovinylacetylene, octafluoro-(1-methycyclobutene), and octafluoro-1,2-dimethylcyclopropene are preferable. Of these, hexafluoro-2-butyne, hexafluoro-1-butyne, hexafluorocyclobutene, hexafluoro-1,3-butadiene, hexafluoro-(1-methylcyclopropene), octafluoro-1-butene, octafluoro-2-butene, octafluoro-1-pentyne, octafluoro-2-pentyne, octafluoro-1,3-pentadiene, octafluoro-1,4-pentadiene, octafluorocyclopentene, octafluoroisoprene, hexafluorovinylacetylene, octafluoro-(1-methycyclobutene), and octafluoro-(1,2-dimethylcyclopropene) are more preferable, with octafluoro-2-pentyne, octafluoro-1,3-pentadiene, and octafluorocyclopentene being still more preferable, octafluoro-2-pentyne and octafluorocyclopentene being still more preferable, and octafluoro-2-pentyne being particularly preferable.

The fluorocarbon compound used has an unsaturated fluorocarbon compound content of preferably 90 wt% or more, more preferably 95 wt% or more, still more preferably 99 wt% or more, and particularly preferably 99.9 wt% or more.

The fluorocarbon compound has a hydrogen atom-containing compound content of preferably 90 ppm by weight or less, more preferably 70 ppm by weight or less, still more preferably 50 ppm by weight or less, and particularly preferably 10 ppm by weight or less. The term "hydrogen atom-containing compound" used herein refers to an organic compound containing a hydrogen atom and an inorganic compound containing a hydrogen atom such as water.
The fluorocarbon compound has a water content of preferably 3 ppm by weight or less, more preferably 1 ppm by weight or less, and particularly preferably 0.1 ppm by weight or less.

If the hydrogen atom-containing compound exists in the fluorocarbon compound, hydrogen atoms are incorporated into a film formed by the CVD method. The presence of the hydrogen atoms may give rise to an increase in the relative dielectric constant of the film, a decrease in film-formation reproducibility, production of corrosive gas when heating the film, a decrease in water repellency, and the like. An optical element with excellent response properties can be obtained by limiting the hydrogen atom-containing compound content in the fluorocarbon compound within the above range.
The hydrogen atom-containing compound content may be determined using a gas chromatograph mass spectrometer, and the water content may be determined using a Karl Fisher moisture meter.

The method of adjusting the hydrogen atom-containing organic compound content in the fluorocarbon compound may be appropriately selected from a method of removing the hydrogen atom-containing organic compounds using an adsorbent, a method of reducing the hydrogen atom-containing organic compound content by distillation, a method of converting the hydrogen atom-containing organic compounds into compounds having a large difference in boiling point from that of the fluorocarbon compound by chemical reaction, and removing the compounds by distillation, and the like.
As the method of adjusting the water content, a method using an adsorbent is suitably used.

The method of producing the fluorocarbon compound is not particularly limited. For example, octafluorocyclopentene with a purity of 99.8 to 99.98% is obtained by reacting 1,2-dichlorohexafluorocyclopentene with potassium fluoride in dimethylformamide under a nitrogen stream while removing the product from a rectifying column provided in the reactor, as disclosed in JP-A-9-95458. The resulting octafluorocyclopentene is subjected to precision distillation using a rectifying column with a large number of plates to obtain octafluorocyclopentene with a water content of about 30 ppm by weight.

As disclosed in JP-A-2003-146917 (EP-1453082A1), octafluoro-2-pentyne with a purity of 99.9% or more is obtained by causing 2,3-dihydrodecafluoropentane to come in contact with melted potassium hydroxide, collecting the produced gaseous compounds in a cooled trap, and subjecting the collected crude product to precision distillation using a rectifying column. According to this method, fractions are collected in the cooled trap during precision distillation to obtain octafluoro-2-pentyne with a water content of about 20 ppm by weight.

A nitrogen gas and an oxygen gas as trace gas components may be present in the fluorocarbon compound. The total content of nitrogen gas and oxygen gas in the fluorocarbon compound is preferably 30 ppm by weight or less.

The CVD method is not particularly limited. An ordinary method may be used. Specifically, the fluorocarbon compound is activated by plasma discharge to produce active species such as ions and radicals to form a fluorocarbon polymer film on the inner surface of the container. The process in which the polymer film is formed is not necessarily known. It is considered that various reactions such as the polymerization reaction and the ring-opening reaction of the unsaturated fluorocarbon compound take part in a complicated manner under electrolytic dissociation conditions in addition to the production of ions and radicals.

As the plasma CVD method, a method disclosed in JP-A-9-237783 or the like may be used. As the plasma generation conditions generally employed, the high frequency power applied to a parallel plate upper electrode (shower head) is 10 W to 10 kW, the temperature of the treatment target material is 0 to 500°C, and the reaction chamber pressure is 0.0133 Pa to 13.3 kPa.

The thickness of the film deposited is usually 0.01 to 10 micrometers. A parallel plate CVD device is generally used for plasma CVD. A microwave CVD device, an ECR-CVD device, an inductively coupled plasma (ICP) CVD device, and a high-density plasma CVD device (helicon wave type or high frequency induction type) may be used.

The fluorocarbon compound is usually supplied to the plasma CVD device together with an inert gas such as helium, neon, argon, or xenon. Since such an inert gas has an effect of diluting the plasma CVD gas and changing the electron temperature and the electron density of plasma, appropriate deposition conditions can be achieved by controlling the balance between radicals and ions during the plasma reaction.

The amount of inert gas supplied to the plasma CVD device is usually 2 to 100 mol, and preferably 5 to 20 mol for 1 mol of the fluorocarbon compound according to the present invention.
The container for the third invention can be obtained in this manner.

A configuration example of the optical element according to the present invention is described below with reference to FIG. 2. In FIG. 2, a reference numeral 7 indicates a cylindrical optical element container. In FIG. 2, a top plate (top portion) and a bottom plate (bottom portion) are provided along the vertical direction (light incident/exit direction). The top plate and the bottom plate are transparent. A reference numeral 8 indicates a second liquid hermetically placed in the container 7.
In this example, the second liquid is a transparent silicone oil. A reference numeral 9 indicates a transparent first liquid hermetically placed in the container 7 and having a refractive index lower than that of the second liquid. In this example, the first liquid is an electrically-conductive liquid such as water in which salt is dissolved. A reference numeral 10 indicates a first electrode for externally applying a potential to the first liquid (electrically-conductive liquid) 9. The first electrode 10 is connected with a control circuit (not shown). An alternating electrical field of about ±200 V is applied to the first electrode 10.

A reference numeral 11 indicates a ring-shaped second electrode provided in an insulator. The second electrode 11 is connected with a control circuit (not shown).
An alternating electrical field of about ±200 V is applied to the second electrode 11 in a phase with a polarity reverse of that of the first electrode 10.

In a state shown in FIG. 2(a) (state in which voltage is not applied), light rays 12 incident from the upper side are refracted at the interface when entering the first liquid 9 from the second liquid 8 due to the difference in refractive index, whereby the light is spread. In a state shown in FIG. 2(b) in which an alternating electrical field is applied, the first liquid 9 (electrically-conductive liquid) pushes aside the second liquid 8 (e.g. silicone oil) near the ring-shaped electrode 11 so that the interface between the liquids forms a convex shape, whereby the light rays 12 incident from the upper side are concentrated.

According to the optical element shown in FIG. 2, the shape of the interface (curvature of interface) can be continuously changed by changing the degree to which the first liquid 9 pushes the second liquid 8 by adjusting the voltage value. Specifically, the focal length of the optical element shown in FIG. 2 can be continuously changed by adjusting the voltage value.

The optical element according to the present invention having the above effects is suitably used as a variable-focus lens such as a lens used for a camera, a copying machine, and a printer, an optical disk pickup lens, and a CCD microlens.

### EXAMPLES

The present invention is described below in more detail by way of examples.
Note that the present invention is not limited to the following examples.

### (Example 1)

A tubular electrode and an electrode made of gold were subjected to insert molding using an alicyclic structure-containing polymer resin (Zeonex 480R manufactured by Zeon Corporation containing 0.05 wt% of hindered amine light stabilizer and 0.05 wt% of alkyl-substituted phenol antioxidant) to obtain an open-ended tubular container base material having an inner diameter of 5 mm, a height of 3 mm, and a thickness of 1 mm. A solution of the alicyclic structure-containing polymer resin was applied to the surface of the tubular electrode exposed on the inner surface of the container and dried to electrically insulate the electrode.

The alicyclic structure-containing polymer resin was separately molded to obtain a disk-shaped top plate and a bottom plate with a holographic surface, each having a thickness of 1 mm, for closing the top and bottom openings of the container.

The container base material was placed in a chamber made of 316L stainless steel (Japanese Industrial Standards; hereinafter the same), and heated at 120°C for three hours under a high-purity argon stream with a content of oxygen and water of 1 ppb by weight or less to remove oxygen and water to less than 10 ppm by weight. After cooling the container base material to room temperature, a 1 wt% fluorine gas (content of oxygen and water: less than 1 ppm by weight) diluted with argon gas was introduced at 30°C by switching the valves while preventing oxygen and water in the air from being mixed. After 10 minutes, high-purity argon with a content of oxygen and water of 1 ppb by weight or less was introduced by switching the valves. The container base material was heated at 120°C for one hour to remove unnecessary fluorine gas.

The inner surface of the container base material treated with the fluorine gas was measured by electron spectroscopy for chemical analysis (ESCA) to confirm that a large number of fluorine atoms were present in the surface portion. After immersing the container base material in ultrapure water for 24 hours, the container base material was measured by electron spectroscopy for chemical analysis (ESCA). A large number of fluorine atoms were present in the surface portion in the same manner as in the measurement before immersion. When measuring the surface of the film using an FTIR-ATR method, broad peaks attributed to C-F stretching vibrations were observed at 1400 to 1000 cm⁻¹. The contact angle of water of the inner surface of the container was 110°. This indicates an increase in water repellency.

After placing silicone oil and a salt solution in the container, the container was sealed using the top plate and the bottom plate to obtain an optical element (element of first invention) having a configuration similar to that of the optical element shown in FIG. 2. When applying a voltage between the electrodes, the shape of the interface between the silicone oil and the salt solution was changed, whereby the refractive index was changed. The shape of the interface did not become unstable on the inner surface of the container. The response to a change in voltage was increased in comparison with a optical element having a container which was not treated with fluorine gas.

### (Example 2)

A tubular electrode and an electrode made of gold were subjected to insert molding using an alicyclic structure-containing polymer resin (Zeonex 480R manufactured by Zeon Corporation containing 0.05 wt% of hindered amine light stabilizer and 0.05 wt% of alkyl-substituted phenol antioxidant) to obtain an open-ended tubular container base material having an inner diameter of 5 mm, a height of 3 mm, and a thickness of 1 mm. A solution of the alicyclic structure-containing polymer resin was applied to the surface of the tubular electrode exposed on the inner surface of the container and dried to electrically insulate the electrode. The alicyclic structure-containing polymer resin was separately molded to obtain a convex lens-shaped top plate for closing the top of the container and a bottom plate with a Fresnel lens-shaped surface.

After placing the container base material in a chamber made of 316L stainless steel, the container base material was heated at 120°C for three hours under a high-purity argon stream with a content of oxygen and water of 1 ppb by weight or less to remove oxygen and water. After cooling the container base material to room temperature, a 1 wt% fluorine gas diluted with argon gas was introduced at 30°C by switching the valves while preventing oxygen and water in the air from being mixed. After 10 minutes, high-purity argon was introduced by switching the valves. The container base material was heated at 120°C for one hour to remove the fluorine gas.

After placing silicone oil and a salt solution in the container, the container was sealed using the top plate and the bottom plate to obtain an optical element (element of the first invention) having a configuration similar to that of the optical element shown in FIG. 2. When applying a voltage between the electrodes, the shape of the interface between the silicone oil and the salt solution was changed, whereby the refractive index was changed. The shape of the interface did not become unstable on the inner surface of the container. The response to a change in voltage was increased in comparison with an optical element having a container which was not treated with fluorine gas.

### (Production Example 1)

A stainless steel pressure-resistant container of which the atmosphere was replaced with nitrogen was charged with 76.8 parts of styrene and 3.2 parts of isoprene. The components were mixed with stirring to prepare mixed monomers. A stainless steel autoclave of which the atmosphere was replaced with nitrogen and which was equipped with an electromagnetic stirrer was charged with 320 parts of dehydrated cyclohexane, 4 parts of the mixed monomers, and 0.1 part of dibutyl ether. 0.454 parts of a hexane solution of n-butyl lithium (concentration: 15%) was added to the mixture at 50°C with stirring to initiate polymerization. After 0.5 hours elapsed from the initiation of polymerization (polymerization conversion rate in this stage was about 96%), 76 parts of the mixed monomers were continuously added over one hour. After 0.5 hours elapsed from the completion of the addition of the mixed monomers (polymerization conversion rate in this stage was about 95%), the reaction was terminated by adding 0.1 part of isopropyl alcohol to obtain a polymerization reaction solution in which a styrene-isoprene random copolymer was dissolved.

3 parts of a stabilized nickel hydrogenation catalyst E22U (60% nickel-supported silica-alumina support manufactured by Nikki Chemical Co., Ltd.) was added to 400 parts of the polymerization reaction solution to obtain a mixed liquid. A stainless steel autoclave equipped with an electric heater and an electromagnetic stirrer was charged with the mixed liquid. A hydrogen gas was supplied to the autoclave, and hydrogenation reaction was carried out for six hours with stirring while maintaining the atmosphere inside the autoclave at 160°C and 4.5 MPa. After the completion of the hydrogenation reaction, the resulting product was filtered through a pressure filter (Fundabac Filter manufactured by Ishikawajima-Harima Heavy Industries Co., Ltd.) equipped with Radiolite #800 as a filtration bed at a pressure of 0.25 MPa to obtain a colorless transparent solution containing an alicyclic structure-containing polymer resin.

0.1 part of poly{[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]} (CAS No.: 71878-19-8) (transmittance of light with a wavelength of 400 nm measured for a 5 wt% chloroform solution using a quartz cell with an optical path length of 10 mm: 97.0%) having a molecular weight of 2000 to 2500 (hindered amine compound) and 0.2 parts of a main-chain hydrogenated product of a styrene-isoprene-styrene block copolymer (SEPS, styrene/isoprene weight ratio = 30/70, melt flow rate: = about 70 g/min (230°C, 2.16 kgf) were added to and dissolved in the resulting colorless transparent solution (polymer resin solid content: 100 parts).

The solution was filtered through a metal fiber filter (manufactured by Nichidai Corporation, pore size: 0.5 micrometers). The filtrate was filtered through a zeta plus filter 3OS (manufactured by Cuno K.K., pore size: 0.5 to 1 micrometer), and then filtered through a metal fiber filter (manufactured by Nichidai Corporation, pore size: 0.2 micrometers) to remove foreign material.

The resulting filtrate (polymer concentration: 20 wt%) was heated to 250°C and continuously supplied to a cylindrical concentration dryer (manufactured by Hitachi Ltd.) at a pressure of 3 MPa. The filtrate was concentrated while adjusting the pressure inside the concentration dryer to 60 kPa and the temperature of the polymer resin solution in the dryer to 260°C. The concentrated solution was supplied to a concentration dryer of the same type at a pressure of 1.5 MPa while maintaining the temperature of the solution at 260°C. The pressure inside the concentration dryer in the second stage was adjusted to 1.5 kPa and the temperature of the polymer resin was adjusted to 270°C to remove the solvent.

The resulting polymer resin had a hydrogenation rate of about 100% (the amount of unhydrogenated aromatic vinyl monomer units was 0.01 mol% or less with respect to the total amount of unhydrogenated aromatic vinyl monomer units and hydrogenated aromatic vinyl monomer units, and the amount of unhydrogenated conjugated diene monomer units was 0 mol% with respect to the total amount of unhydrogenated conjugated diene monomer units and hydrogenated conjugated diene monomer units) and had a glass transition temperatures (Tg) of 125°C.

The polymer resin from which the solvent was removed was continuously removed from the concentration dryer in a melted state, extrusion-molded in a class 100 clean room, cooled with water, and cut using a pelletizer (OSP-2 manufactured by Osada Seisakusho Co., Ltd.) to obtain pellets 1.

The pellets 1 were dissolved in chlorobenzene and analyzed using a gas chromatograph (G-3000 manufactured by Hitachi Ltd., detection limit: 10 ppm). The volatile content was 150 ppm.

The pellets 1 were dissolved in tetrahydrofuran and measured by gel permeation chromatography to determine the molecular weight with respect to the molecular weight of standard polystyrene to determine the weight average molecular weight (Mw) and the number average molecular weight (Mn). The weight average molecular weight (Mw) was 85,000, and the ratio of the weight average molecular weight (Mw) to the number average molecular weight (Mn) was 1.18.

The pellets 1 were dissolved in tetralin purified by filtration through a filter with a pore size of 0.2 micrometers to obtain a 1.5% solution. The number of foreign materials with a particle diameter of 0.5 micrometers or more in the solution was measured using a light scattering particle counter (KS-58 manufactured by RION Co., Ltd.). The number of foreign materials was 2.1×10³ per gram.

The water vapor transmission rate of the pellets 1 at 40°C measured for a flat sheet with a thickness of 1 mm was 0.01 g/m².day or less. The water absorption (ASTM D570) was 0.001%.
The transmittance of light with a wavelength of 405 nm measured for a flat sheet with a thickness of 1 mm was 90% or more, and a decrease in transmittance of light with a wavelength of 405 nm of 1% or less after applying light with a wavelength of 405 nm at a temperature of 25°C and an irradiation intensity of 4000 W/m² for an irradiation time of 2000 hours.

### (Production Example 2)

A glass reactor of which the atmosphere was replaced with nitrogen was charged with 100 parts of an addition polymer of tetracyclododecene and ethylene (limiting viscosity η: 0.54 dl/g, Tg: 69°C, molar ratio of tetracyclododecene and ethylene: 1:3) and 900 parts of cyclohexane. The mixture was heated to 50°C. After the addition of 20 parts of aluminum chloride with stirring, the components were reacted at a reaction temperature of 50°C. After 24 hours of reaction, the reaction solution was added to 2000 parts of isopropyl alcohol with stirring. The precipitated modified product was collected and dried under a reduced pressure of 1.3×10² Pa (1torr) or less for 24 hours to obtain 98 parts of a colorless alicyclic structure-containing polymer resin.

0.1 part of poly{[6-(1,1,3,3-tetramethylbutyl)amino-1,3,5-triazine-2,4-diyl] [(2,2,6,6-tetramethyl-4-piperidyl)imino]hexamethylene[(2,2,6,6-tetramethyl-4-piperidyl)imino]} (transmittance of light with a wavelength of 400 nm measured for a 5 wt% chloroform solution using a quartz cell with an optical path length of 10 mm: 97.0%) having a molecular weight of 2000 to 2500 as a hindered amine compound was added to 100 parts of the resulting polymer resin. The components were melt-kneaded using a twin-screw extruder at 230°C to obtain pellets 2.

The water vapor transmission rate of the pellets 2 at 40°C measured for a flat sheet with a thickness of 1 mm was 0.04 g/m².day or less. The water absorption (ASTM D570) was 0.03%.
The transmittance of light with a wavelength of 405 nm measured for a flat sheet with a thickness of 1 mm was 90% or more, and a decrease in transmittance of light with a wavelength of 405 nm was 1% or less after applying light with a wavelength of 405 nm at a temperature of 25°C and an irradiation intensity of 4000 W/m² for an irradiation time of 2000 hours.

### (Comparative Production Example 1)

Pellets 3 were obtained in the same manner as in Production Example 2 except for adding 0.1 part ofpoly{[6-(1,1,3,3-tetramethylbutyl)amino-1,3,5-triazine-2,4-diyl] [(2,2,6,6-tetramethyl-4-piperidyl)imino]hexamethylene[(2,2,6,6-tetramethyl-4-piperidyl)imino]} (transmittance of light with a wavelength of 400 nm measured for a 5 wt% chloroform solution using a quartz cell with an optical path length of 10 mm: 89.0%) having a molecular weight of about 2500 as the hindered amine compound.

The water vapor transmission rate of the pellets 3 at 40°C measured for a flat sheet with a thickness of 1 mm was 0.06 g/m².day or less. The water absorption (ASTM D570) was 0.05%.

### (Comparative Production Example 2)

Pellets 4 were obtained in the same manner as in Production Example 2 except for adding 0.1 part of 1-[2-[3-(3,5-di-t-butyl-4-hydroxyphenyl)propionyloxy]ethyl]-4-[3-(3,5-di-t-butyl-hydroxyphenyl)propionyloxy]-2,2,6,6-tetramethylpiperidine (transmittance of light with a wavelength of 400 nm measured for a 5 wt% chloroform solution using a quartz cell with an optical path length of 10 mm: 98.0%) having a molecular weight of 722 as the hindered amine compound.

The water vapor transmission rate of the pellets 4 at 40°C measured for a flat sheet with a thickness of 1 mm was 0.07 g/m².day or less. The water absorption (ASTM D570) was 0.07%.

### (Example 3)

A tubular gold electrode, an electrode, and the pellets 1 obtained in Production Example 1 were subjected to insert molding to obtain an open-ended tubular container base material having an inner diameter of 5 mm, a height of 3 mm, and a thickness of 1 mm. A solution of the pellets 1 obtained in Production Example 1 was applied to the surface of the tubular electrode exposed on the inner surface of the container and dried to electrically insulate the electrode.

The pellets 1 obtained in Production Example 1 were separately molded to obtain a disk-shaped top plate and a bottom plate with a holographic surface, each having a thickness of 1 mm, for closing the top and bottom openings of the container.
After placing the container base material in a chamber made of 316L stainless steel, the container base material was heated at 120°C for three hours under a high-purity argon stream with a content of oxygen and water of 1 ppb by weight or less to remove oxygen and water to less than 10 ppm by weight. After cooling the container base material to room temperature, a 1 wt% fluorine gas (content of oxygen and water: less than 1 ppm by weight) diluted with argon gas was introduced at 30°C by switching the valves while preventing oxygen and water in the air from being mixed. After 10 minutes, high-purity argon with a content of oxygen and water of 1 ppb by weight or less was introduced by switching the valves. The container base material was heated at 120°C for one hour to remove unnecessary fluorine gas.

The inner surface of the container base material treated with the fluorine gas was measured by electron spectroscopy for chemical analysis (ESCA) to confirm that a large number of fluorine atoms were present in the surface portion. After immersing the container base material in ultrapure water for 24 hours, the container base material was measured by electron spectroscopy for chemical analysis (ESCA). A large number of fluorine atoms were present in the surface portion in the same manner as in the measurement before immersion. When measuring the surface of the film using an FTIR-ATR method, broad peaks attributed to C-F stretching vibrations were observed at 1400 to 1000 cm⁻¹. The contact angle of water of the inner surface of the container was 110°. This indicates an increase in water repellency.

After placing silicone oil and a salt solution in the container base material, the container was sealed using the top plate and the bottom plate to obtain an optical element (element of the second invention) having a configuration similar to that of the optical element shown in FIG. 2. When applying a voltage between the electrodes, the shape of the interface between the silicone oil and the salt solution was changed, whereby the refractive index was changed. The shape of the interface did not become unstable on the inner surface of the container. The response to a change in voltage was excellent.

Blue laser light (405±10 nm and 2500 mW/cm²) from a laser diode (TC4030S-F405ASU manufactured by NEOARK Corporation) was allowed to pass through the top plate and the bottom plate of the optical element placed in a room at 60°C for 72 hours. The shape of the surfaces of the top plate and the bottom plate was observed using an optical microscope (X60 manufactured by OLYMPUS). No ablation (floating of the surface of the molded product) was observed.

Blue laser light (405±10 nm and 200 mW/cm²) from a laser diode (TC4030S-F405ASU manufactured by NEOARK Corporation) was allowed to pass through the top plate and the bottom plate of the optical element placed in a room at 60°C for 240 hours. Light with a high intensity was applied to the optical element through the side surface after applying the laser light. No cloudiness was observed.

### (Example 4)

A tubular electrode and an electrode made of gold were subjected to insert molding using an alicyclic structure-containing polymer resin (Zeonex 480R manufactured by Zeon Corporation containing 0.05 wt% of hindered amine light stabilizer and 0.05 wt% of alkyl-substituted phenol antioxidant) to obtain an open-ended tubular container base material having an inner diameter of 5 mm, a height of 3 mm, and a thickness of 1 mm. A solution of the alicyclic structure-containing polymer resin was applied to the surface of the tubular electrode exposed on the surface of the container inner and dried to electrically insulate the electrode.

The pellets 2 obtained in Production Example 2 were separately molded to obtain a convex lens-shaped top plate for closing the top of the container and a bottom plate with a Fresnel lens-shaped surface. After placing silicone oil and a salt solution in the container base material, the container was sealed using the top plate and the bottom plate to obtain an optical element (element of the second invention) having a configuration similar to that of the optical element shown in FIG. 2.

The optical element was evaluated in the same manner as in Example 1. When applying a voltage between the electrodes, the shape of the interface between the silicone oil and the salt solution was changed, whereby the refractive index was changed. The shape of the interface did not become unstable on the inner surface of the container. The response to a change in voltage was increased in comparison with an optical element having a container which was not treated with fluorine gas. The optical element after applying blue laser light did not show ablation (floating of the surface of the molded product) and cloudiness.

### (Comparative Example 1)

An optical element was obtained in the same manner as in Example 4 except for using the pellets 3 obtained in Comparative Production Example 1 instead of the pellets 2 obtained in Production Example 2. The optical element after applying blue laser light showed ablation and became clouded to some extent.

### (Comparative Example 2)

An optical element was obtained in the same manner as in Example 4 except for using the pellets 4 obtained in Comparative Production Example 2 instead of the pellets 2 obtained in Production Example 2. The optical element after applying blue laser light showed ablation and became clouded.

As is clear from the above results, ablation and cloudiness did not occur on the surface of the optical element after applying blue laser light when using poly{[6-(1,1,3,3 -tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]} having a molecular weight of 2000 to 2500 and a light transmittance of 97.0% as the hindered amine compound (Examples 3 and 4).

On the other hand, ablation and a small degree of cloudiness occurred when using the hindered amine compound having a light transmittance of 89.0% (Comparative Example 1).
Ablation and cloudiness occurred when using 1-[2-[3-(3,5-di-t-butyl-4-hydroxyphenyl)propionyloxy]ethyl]-4-[3-(3,5-di-t-butylhydroxyphenyl)propionyloxy]-2,2,6,6-tetramethylpiperidine having a light transmittance of 95% and a molecular weight of 722 as the hindered amine compound (Comparative Example 2).

### (Example 5)

A tubular electrode and an electrode made of copper were subjected to insert molding using an alicyclic structure-containing polymer resin (Zeonex 480R manufactured by Zeon Corporation containing 0.05 wt% of hindered amine light stabilizer and 0.05 wt% of alkyl-substituted phenol antioxidant) to obtain an open-ended tubular container base material having an inner diameter of 5 mm, a height of 3 mm, and a thickness of 1 mm.

The alicyclic structure-containing polymer resin was separately molded to obtain a disk-shaped top plate and a bottom plate, each having a thickness of 1 mm, for closing the top and bottom of the container.
The container base material was placed in a parallel plate plasma CVD device and subjected to plasma CVD at a pressure of 33 Pa (250 mTorr), an RF output (frequency: 13.56 MHz) of 400 W, and a substrate temperature of 260°C while supplying octafluorocyclopentene at a flow rate of 6.668×10⁻⁴ liter/sec and argon at a flow rate of 6.668 ×10⁻³ liter/sec to form a CVD film with a thickness of 0.5 micrometers on the inner surface of the container. The film showed no void, was dense and uniform, and exhibited excellent adhesion to the inner surface. The film had a relative dielectric constant of 2.4 and a contact angle of water of 109 degrees. This indicates that the resulting CVD film exhibited insulating properties and water repellency.

After placing silicone oil and a salt solution in the container, the container was sealed using the top plate and the bottom plate to obtain an optical element (element of third invention) having a configuration similar to that of the optical element shown in FIG. 2. When applying a voltage between the electrodes, the shape of the interface between the silicone oil and the salt solution was changed, whereby the refractive index was changed. The shape of the interface did not become unstable on the inner surface of the container. The response to a change in voltage was increased in comparison with an optical element having a container which was not treated with fluorine gas.

### (Example 6)

An alicyclic structure-containing polymer resin (Zeonex 480R manufactured by Zeon Corporation containing 0.05 wt% of hindered amine light stabilizer and 0.05 wt% of alkyl-substituted phenol antioxidant) was subjected to insert molding to obtain an open-ended tubular container base material having an inner diameter of 5 mm, a height of 3 mm, and a thickness of 1 mm.

An ITO film was deposited on the side surface of the container using a deposition method to form a ring-shaped electrode.
The alicyclic structure-containing polymer resin was separately molded to obtain a disk-shaped top plate and a bottom plate, each having a thickness of 1 mm, for closing the top and bottom of the container. An ITO film was deposited on the inner surface of the bottom plate using a deposition method to form an electrode.

The container base material was placed in a parallel plate plasma CVD device and subjected to plasma CVD at a pressure of 33 Pa (250 mTorr), an RF output (frequency: 13.56 MHz) of 400 W, and a substrate temperature of 260°C while supplying octafluorocyclopentene at a flow rate of 6.668 ×-10⁻⁴ liter/sec and argon at a flow rate of 6.668×10⁻³ liter/sec to form a CVD film with a thickness of 0.5 micrometers on the inner surface of the container.
The film showed no void, was dense and uniform, and exhibited excellent adhesion to the ITO film (ring-shaped electrode). The film had a relative dielectric constant of 2.3 and a contact angle of water of 110 degrees.

After placing silicone oil and a salt solution in the container, the container was sealed using the top plate and the bottom plate to obtain an optical element (element of third invention) having a configuration similar to that of the optical element shown in FIG. 2. When applying a voltage between the electrodes, the shape of the interface between the silicone oil and the salt solution was changed, whereby the refractive index was changed. The shape of the interface did not become unstable on the inner surface of the container. The response to a change in voltage was increased in comparison with an optical element having a container which was not treated with fluorine gas.

### INDUSTRIAL APPLICABILITY

The optical element according to the present invention can be reduced in size, allows the refractive power for light passing therethrough to be efficiently controlled with a simple configuration, is suitable as a variable-focus lens and the like, and allows continuous transmission or concentration of light from a blue laser (short-wavelength laser).
Therefore, the optical element according to the present invention is suitably used as a variable-focus lens such as a lens used for a camera, a copying machine, and a printer, an optical disk pickup lens, and a CCD microlens.

## Claims

1. An optical element comprising a first liquid, a second liquid, and a container, the first liquid and the second liquid substantially differing in refractive index and being immiscible, the container being a resin container of which an inner surface portion of a container wall has a resin phase with a fluorine atom content higher than that of an internal portion of the container wall, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

2. An optical element comprising a first liquid, a second liquid, and a container, the first liquid and the second liquid substantially differing in refractive index and being immiscible, a top portion and a bottom portion of the container being formed of a resin composition including a resin and a hindered amine compound having a transmittance of light with a wavelength of 400 nm measured for a 5 wt% chloroform solution using a cell with 10-mm optical path of 90% or more and a molecular weight of 1500 or more, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

3. An optical element comprising a first liquid, a second liquid, and a container, the first liquid and the second liquid substantially differing in refractive index and being immiscible, an inner surface of the container being coated with a CVD film formed of a fluorocarbon compound, the first liquid and the second liquid being hermetically placed in the container so that an interface between the first liquid and the second liquid forms a specific shape, and the shape of the interface between the first liquid and the second liquid being changed by applying a voltage between the first liquid and the second liquid through electrodes formed in the container.

4. The optical element according to any one of claims 1 to 3, wherein the container includes an alicyclic structure-containing polymer resin.

5. The optical element according to any one of claims 1 to 3, wherein the container has an inner surface of a side portion with a contact angle of water of 105 degrees or more.

6. The optical element according to any one of claims 1 to 3, wherein the top portion or the bottom portion of the container is formed in a shape of a lens, a prism, a holographic surface, or a Fresnel lens.

7. The optical element according to any one of claims 1 to 3, wherein the first liquid and the second liquid are electrically-conductive or polar liquids.
